# EUROPEAN PATENT APPLICATION

(11) **EP 1 327 929 A1**
(43) Date of publication of application: **16.07.2003**
(21) Application number: 02000675.5
(22) Date of filing: 11.01.2002
(51) Int. Cl.: G06F 3/033, G06F 3/023

(54) **Operating a browser to display first and second virtual keyboard areas**

(71) Applicant: SAP Aktiengesellschaft, 69190 Walldorf (DE)
(72) Inventor: Spriestersbach, Axel, 76137 Karlsruhe (DE); Tunney, Patrick, 76133 Karlsruhe (DE)

(57) **Abstract**

Operating a browser that interprets a markup page and thereby displays a virtual keyboard (350) to a user. The operation comprises: displaying (405) a first keyboard area (350); presenting (410) first and second input fields of first and second types, respectively, to the user; selecting (420) an input field by relating an input device to either the first input field or the second input field; displaying (430) a second keyboard area corresponding to the type of the selected input field; reading (430) input from the user from the first keyboard area and from the second keyboard area to the selected field; and changing (450) the first keyboard area according to user commands to a keyboard selector.

## Description

### Field of the Invention

The present invention generally relates to data processing and, more particularly, relates to computer methods, programs and systems that interact with the users through browsers.

### Background of the Invention

Desktop or laptop computers have complete keyboards with keys for letters (e.g., arranged as QWERTY or QWERTZ), numbers (e.g., 0...9), special characters for email communication and currencies (e.g., @, $, 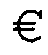 ) and other symbols. Smaller computers, such as personal digital assistants (PDA) or mobile phones have a limited number of keys or emulate the keyboard on screen. Often there is not enough space for displaying all symbols. Users have to operate the computer for toggling between different keyboard modes. This is however inconvenient.

The problem remains when the computer interacts with the users through a browser.

There is an ongoing need to provide improvements to computer methods, programs and system that alleviate these and other disadvantages of the prior art.

### Literature

US 4,885,580, US 5,916,310, US 6,094,197, WO 99/14657, DE 196 369 53 C1

### Summary of the Invention

According to a method of the present invention, properties of input objects (e.g., input fields) control first and second areas of virtual keyboards. User selection explicitly determines the appearance of a first area; object types implicitly determine the appearance of a second area. This improves data input for virtual keyboards.

The present invention relates to a method for operating a browser that interprets a markup page and thereby displays a virtual keyboard to a user; the method comprises the following steps:
displaying a first keyboard area; presenting first and second input fields of first and second types, respectively, to the user; receiving a selection for an input field by the user by relating an input device to either the first input field or the second input field; displaying a second keyboard area corresponding to the type of the selected input field; reading input from the user from the first keyboard area and from the second keyboard area; and changing the first keyboard area according to user commands to a keyboard selector.

Preferably, the page is encoded in a markup language selected from the group of HTML, XML, WML.

Preferably, receiving a selection for an input field comprises to monitor a cursor going over the input fields.

Preferably, the steps displaying first area and changing are repeated in a first loop, and wherein steps selecting and displaying second area are repeated in a second loop.

The present invention also relates to a server computer that generates a page having computer instructions for performing the method.

The present invention also relates to a markup page with instructions to a browser that controls a computer processor to display a virtual keyboard on a screen. The instructions comprise: instructions for displaying a first keyboard area; instructions for presenting first and second input fields of first and second types, respectively; instructions for receiving a selection for an input field by a user by relating an input device to either the first input field or the second input field; instructions for displaying a second keyboard area corresponding to the type of the selected input field; instructions for reading input from the user from the first keyboard area and from the second keyboard area; and instructions for changing the first keyboard area according to user commands to a keyboard selector.

The present invention also relates to a computer program product for controlling a virtual keyboard with a first area and a second area on a screen and for inputting data into a first input field of a first type and into a second input field of a second type, the product with first loop instructions and second loop instructions.

The product characterized in that the first loop instructions have instructions for displaying the first area and changing the first area according to user commands to a keyboard selector; and that the second loop instructions have instructions for detecting the selection of an input field by the user who relates an input device to either the first input field or the second input field and for displaying the second area corresponding to the type of the selected input field.

### Brief Description of the Drawings

- FIG. 1: illustrates a simplified block diagram of a computer network system having a plurality of computers for implementing the present invention;
- FIG. 2: illustrates a server computer and a client computer of the system of FIG. 1 in an exemplary scenario;
- FIG. 3: illustrates a simplified flowchart of a method of the present invention;
- FIG. 4: illustrates an embodiment of the method of FIG. 3; and
- FIGS. 5-8: illustrate consecutive browser presentations for the example scenario.

### Computer System in General

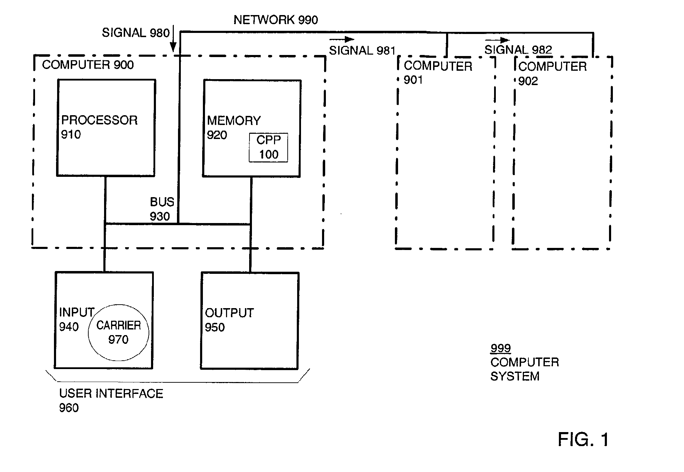

FIG. 1 illustrates a simplified block diagram of the inventive computer network system 999 having a plurality of computers 900, 901, 902 (or 90q, with q=0...Q-1, Q any number).

Computers 900-902 are coupled via inter-computer network 990. Computer 900 comprises processor 910, memory 920, bus 930, and, optionally, input device 940 and output device 950 (I/O devices, user interface 960). As illustrated, the invention is present by computer program product 100 (CPP), program carrier 970 and program signal 980, collectively "program".

In respect to computer 900, computer 901/902 is sometimes referred to as "remote computer", computer 901/902 is, for example, a server, a router, a peer device or other common network node, and typically comprises many or all of the elements described relative to computer 900. Hence, elements 100 and 910-980 in computer 900 collectively illustrate also corresponding elements 10q and 91q-98q (shown for q=0) in computers 90q.

Computer 900 is, for example, a conventional personal computer (PC), a desktop and hand-held device, a multiprocessor computer, a pen computer, a microprocessor-based or programmable consumer electronics, a minicomputer, a mainframe computer, a personal mobile computing device, a mobile phone, a portable or stationary personal computer, a palmtop computer or the like.

Processor 910 is, for example, a central processing unit (CPU), a micro-controller unit (MCU), digital signal processor (DSP), or the like.

Memory 920 symbolizes elements that temporarily or permanently store data and instructions. Although memory 920 is conveniently illustrated as part of computer 900, memory function can also be implemented in network 990, in computers 901/902 and in processor 910 itself (e.g., cache, register), or elsewhere. Memory 920 can be a read only memory (ROM), a random access memory (RAM), or a memory with other access options. Memory 920 is physically implemented by computer-readable media, such as, for example: (a) magnetic media, like a hard disk, a floppy disk, or other magnetic disk, a tape, a cassette tape; (b) optical media, like optical disk (CD-ROM, digital versatile disk - DVD); (c) semiconductor media, like DRAM, SRAM, EPROM, EEPROM, memory stick, or by any other media, like paper.

Optionally, memory 920 is distributed across different media. Portions of memory 920 can be removable or non-removable. For reading from media and for writing in media, computer 900 uses devices well known in the art such as, for example, disk drives, tape drives.

Memory 920 stores support modules such as, for example, a basic input output system (BIOS), an operating system (OS), a program library, a compiler, an interpreter, and a text- processing tool. Support modules are commercially available and can be installed on computer 900 by those of skill in the art. For simplicity, these modules are not illustrated.

CPP 100 comprises program instructions and - optionally - data that cause processor 910 to execute method steps of the present invention. Method steps are explained with more detail below. In other words, CPP 100 defines the operation of computer 900 and its interaction in network system 999. For example and without the intention to be limiting, CPP 100 can be available as source code in any programming language, and as object code ("binary code") in a compiled form. Persons of skill in the art can use CPP 100 in connection with any of the above support modules (e.g., compiler, interpreter, operating system).

Although CPP 100 is illustrated as being stored in memory 920, CPP 100 can be located elsewhere. CPP 100 can also be embodied in carrier 970.

Carrier 970 is illustrated outside computer 900. For communicating CPP 100 to computer 900, carrier 970 is conveniently inserted into input device 940. Carrier 970 is implemented as any computer readable medium, such as a medium largely explained above (cf. memory 920).

Generally, carrier 970 is an article of manufacture comprising a computer readable medium having computer readable program code means embodied therein for executing the method of the present invention. Further, program signal 980 can also embody computer program 100.

Signal 980 travels on network 990 to computer 900.

Having described CPP 100, program carrier 970, and program signal 980 in connection with computer 900 is convenient. Optionally, program carrier 971/972 (not shown) and program signal 981/982 embody computer program product (CPP) 101/102 to be executed by processor 911/912 (not shown) in computers 901/902, respectively.

Input device 940 symbolizes a device that provides data and instructions for processing by computer 900. For example, device 940 is a keyboard, a pointing device (e.g., mouse, trackball, cursor direction keys), microphone, joystick, game pad, scanner, disk drive.

Although the examples are devices with human interaction, device 940 can also operate without human interaction, such as, a wireless receiver (e.g., with satellite dish or terrestrial antenna), a sensor (e.g., a thermometer), a counter (e.g., goods counter in a factory). Input device 940 can serve to read carrier 970.

Output device 950 symbolizes a device that presents instructions and data that have been processed. For example, a monitor or a display, (cathode ray tube (CRT), flat panel display, liquid crystal display (LCD), speaker, printer, plotter, vibration alert device.

Similar as above, output device 950 communicates with the user, but it can also communicate with further computers.

Input device 940 and output device 950 can be combined to a single device; any device 940 and 950 can be provided optional.

Bus 930 and network 990 provide logical and physical connections by conveying instruction and data signals.

While connections inside computer 900 are conveniently referred to as "bus 930", connections between computers 900-902 are referred to as "network 990". Optionally, network 990 comprises gateways being computers that specialize in data transmission and protocol conversion.

Devices 940 and 950 are coupled to computer 900 by bus 930 (as illustrated) or by network 990 (optional). While the signals inside computer 900 are mostly electrical signals, the signals in network are electrical, magnetic, optical or wireless (radio) signals.

Networking environments (as network 990) are commonplace in offices, enterprise-wide computer networks, intranets and the internet (i.e. world wide web). The physical distance between a remote computer and computer 900 is not important. Network 990 can be a wired or a wireless network. To name a few network implementations, network 990 is, for example, a local area network (LAN), a wide area network (WAN), a public switched telephone network (PSTN); a Integrated Services Digital Network (ISDN), an infra-red (IR) link, a radio link, like Universal Mobile Telecommunications System (UMTS), Global System for Mobile Communication (GSM), Code Division Multiple Access (CDMA), or satellite link.

Transmission protocols and data formats are known, for example, as transmission control protocol/internet protocol (TCP/IP), hyper text transfer protocol (HTTP), secure HTTP, wireless application protocol, unique resource locator (URL), a unique resource identifier (URI), hyper text markup language HTML, extensible markup language (XML), extensible hyper text markup language (XHTML), wireless application markup language (WML), Standard Generalized Markup Language (SGML) etc.

Interfaces coupled between the elements are also well known in the art. For simplicity, interfaces are not illustrated. An interface can be, for example, a serial port interface, a parallel port interface, a game port, a universal serial bus (USB) interface, an internal or external modem, a video adapter, or a sound card.

Computer and program are closely related. As used hereinafter, phrases, such as "the computer provides" and "the program provides", are convenient abbreviation to express actions by a computer that is controlled by a program.

### Detailed Description of a Preferred Embodiment

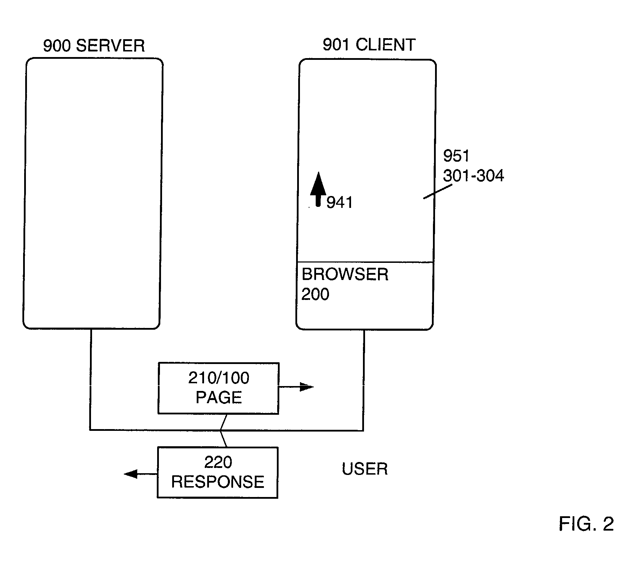

FIG. 2 illustrates server computer 900 and client computer 901 of the system of FIG. 1 in an exemplary scenario. Server computer 900 and client computer 901 communicate via TCP/IP, WAP or via other protocol.

Client computer 901 runs browser 200 that is commercially available.

As indicated by an arrow, server computer 900 sends page 210 encoded in markup language (e.g., HTML, XML, WML, "markup page") to client computer 901. Page 210 has CPP 100 to operate browser 200 according to a method of the present invention. In operation, computer 901 presents presentations 301-304 with changing virtual keyboard areas to the user. The user operates input device 941 (e.g., cursor on screen) to provide response 220 to server computer 900 (arrow).

In the example, the user operates keys to input the address "Q@Y.de" and the monetary value " 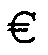 10". An exemplary HTML-page is explained at the end of the description.

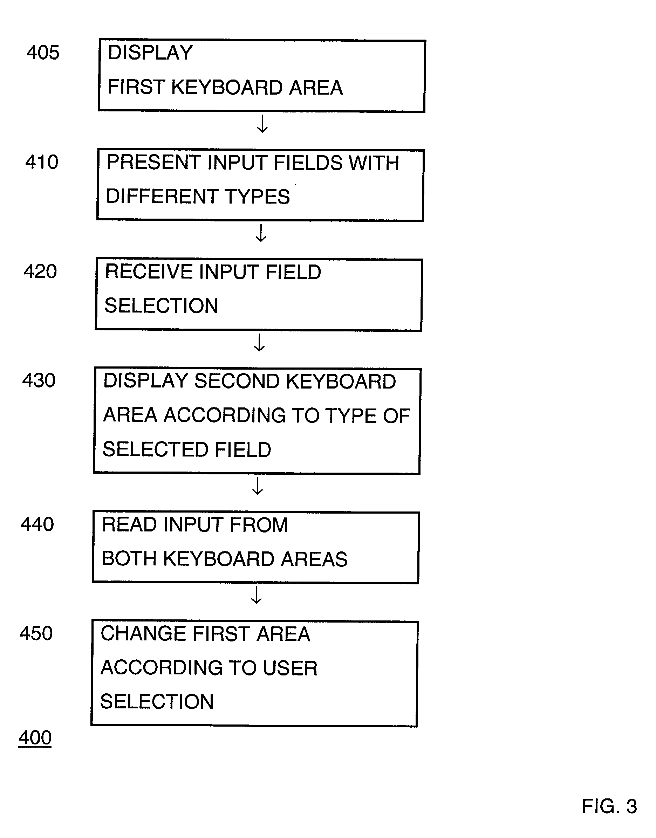

FIG. 3 illustrates a simplified flowchart of method 400 of the present invention. Method 400 is a method for operating browser 200 that interprets markup page 210 and thereby displays 405 virtual keyboard 350/360 to a user.

In step displaying 405, browser 200 displays first keyboard area 350.

In step presenting 410, browser 200 presents first input field 310 of first type (e.g., EMAIL) and second input field 320 of second type (e.g., VALUE) to the user.

In step receiving selection 420, browser 200 receives a user selection for input field 310/320 by relating input device 941 to either first input field 310 or second input field 320 (e.g., monitoring a cursor going over input field 310 or 320).

In step displaying 430, browser 200 displays second keyboard area 360 corresponding to the type of selected input field 310/320 (e.g., area with email characters or with currency characters).

In step reading 440, browser 200 reads input from the user from first keyboard area 350 and from second keyboard area 360 (preferably, also presenting the input in selected field 310/320); and

In step changing 450, browser 200 changes first keyboard area 350 according to user commands to keyboard selector 370.

Preferably, page 210 is in a markup language selected from the group of HTML, XML, WML.

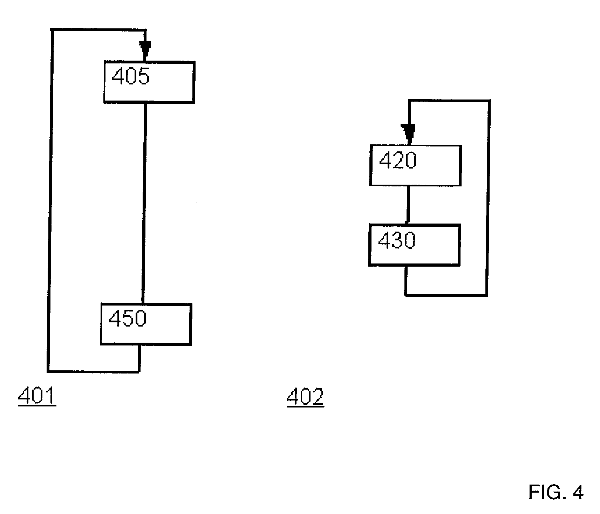

FIG. 4 illustrates of the method in a further embodiment. Preferably, the steps displaying first area 405 and changing 450 are repeated in first loop 401, and steps receiving selection 420 and displaying second area 430 are repeated in second loop 402. This allows the user to choose the most suitable keyboard appearance at any time.

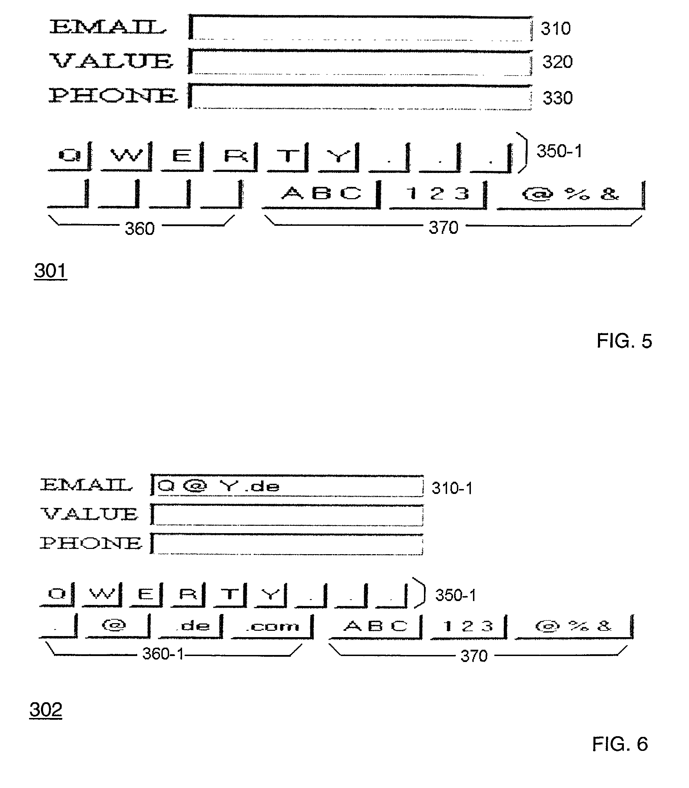

FIGS. 5-8 illustrate consecutive browser presentations 301-304 for the example scenario. Preferably, the scenario has headlines, submit buttons, keys for A to Z and the like. As illustrated, the presentations have first input field 310 ("EMAIL"), second input field 320 ("VALUE") optional third input field 330 ("PHONE"), virtual keyboard 350/360 with first area 350 and second area 360, and keyboard selector 370. Where appropriate, suffices -1 and -2 distinguish different states.
Selector 370 has button "ABC" for switching area 350 to QWERTY, button "123" for switching area 350 to numbers, and button "@ % &" for switching area 350 to special characters.

FIG. 5 illustrates first presentation 301 having fields 310, 320 and 330 (still empty, present 410) as well as areas 350-1 and 360 in initial state (display 405). Area 350-1 has the initial state ("configuration") QWERTY.

FIG. 6 illustrates second presentation 302. The user has selected (step 420) first input field 310. Browser 200 therefore displays second area 360 in the corresponding state 360-1 with special characters suitable for email input (e.g., period, @, top-level domains, etc.). Also, the user has operated key "Q" of area 350-1, key "@" of area 360-1, key "Y" of area 350-1 and key ".de" of area 360-1. Browser 200 has read this key operations to input field 310 (Q@Y.de, 310-1).

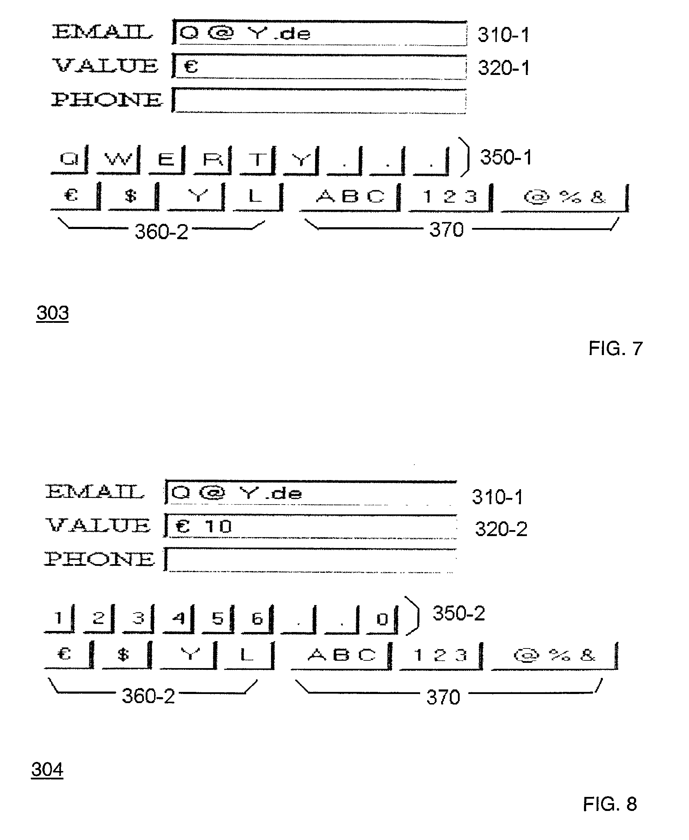

FIG. 7 illustrates third presentation 303. In repetition of step 420, the user has selected second input field 320. Browser 200 has displayed second area 360-2 accordingly with currency symbols (e.g., for Euro, US-Dollar, Yen, British Pound), the user has operated " 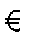 " and browser 200 reads the symbol " 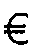 " into field 320-1. With first area 350-1 still in QWERTY, the user is still unable to input numbers. The user therefore operates the "123" button of selector 370.

FIG. 8 illustrates fourth presentation 304. As in step 450, the user has changed first area 350 to numbers and has operated keys 1 and 0 in area 350-2. Browser 200 has read this number 10 into field 320-2. The other fields and areas remain unchanged.

Operating selector 370 (step 450) is possible all the time. The order by that the user selects the fields (step 420) is not important. Optionally, the following embodiments are proposed:

Server computer 900 and client computer 901 communicate via Wireless Application Protocol (WAP). The present invention allows displaying special characters that that required for predefined input objects. Input device 941 is not necessarily the cursor but can be an input pen or even a voice command. Definitions of character sets, for example, for the arrays can be defined by XML.

Switching between difference natural language can be supported as well. This is convenient, for example, in translation applications that interact with the user via different character sets (e.g., English and Russian). Instead of symbols, predefined words can be displayed (e.g., currency EUR for 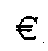 , USD for $, but less space saving).

### Exemplary HTML-page

The following code is an example for page 210. Persons of skill in the art can introduce modifications without departing from the scope of the invention.

The code starts with declarations, for example:
<html>
<head>
</head>
<body>.

The code continues with instructions to present input fields (cf. step 410), for example for field 310:
<table>
<td>EMAIL </td>
<td>
<input datatype="first_type" type="text" onFocus = "focusChange()"/>
</td>
</table>.

Similar statements are provided for fields 320 and 330. Java script declarations with function calls follow, for example:
<script type="text/javascript"> var current_focus;
init();
display_keyboards().

The functions are defined in the following. Area 350 is defined for 3 states (alpha/QWERTY, numeric, symbols). The initial state is alpha/QWERTY. Area 360 is defined to be initially empty (cf. 301, step 405):
function init()
keyboard_alp =
new Array
("Q", "W", "E", "R", "T", "Y", ".", ".", ".");
keyboard_num =
new Array
("1", "2", "3", "4", "5", ".", ".", "0");
keyboard_sym =
new Array
(":", ".", " 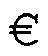 ", "$", "/", ", ", ".", ".", "@");
second_keyboard =
new Array
(" ", " ", " ", " ");
current_first_keyboard = keyboard_alp.

The following functions are instructions for step 450.

Global variable "current_first_keyboard" defines first area 350, for example:
function focusChange() var key = event.srcElement.datatype;
current_focus = event.srcElement; change_second_keyboard(key)
function mode() var key = event.srcElement.id;
if (key=='alp') {current_first_keyboard = keyboard_alp;} if (key=='sym') {current_first_keyboard = keyboard_sym;} if (key=='num') {current_first_keyboard = keyboard_num;} display_keyboards().

The following instructions display the symbols of the keys that are operated by the user:
function pressed()
var key = event.srcElement.value;
current_focus.value = current_focus.value + key.

The following function is code for step 430. The types of input fields 310, 320 and 330 are referred to as first, second and third type, respectively, for example:
function change_second_keyboard(key)
{ if (key=='first_type') second_keyboard =
new Array (" . ", " @ ", " .de", ".com");
if (key=='second_type') second_keyboard =
new Array (" 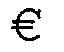 ", " $ ", " Y ", " L ");
if (key=='third_type') second_keyboard =
new Array ("(" , ")" , " - ", "+ ").

Displaying both areas follows (used in steps 405, 430, 450), for example: display_keyboards().

Displaying and changing keyboards (steps 405, 430, 450) also comprises to remove previous keyboards:
function display_keyboards() var current;
var i = 0;
var node = document,getElementById("keyboard");
if (node) node.parentElement.removeChild(node).

Displaying first area 350 conveniently uses tables and counters through all array elements, for example:
var x = document.createElement('p');
x.id='keyboard';
document.body.appendChild(x);
var table = document.createElement('table'); x.appendChild(table);
var tablebody = document.createElement('tbody'); table.appendChild(tablebody);
var tr = document.createElement('tr');
var input, td;
while (i<current_first_keyboard.length);
td = document.createElement('td');
input = document.createElement('input'); input.type='button'; input.value=current_first_keyboard[i]; input.attachEvent("onclick", pressed); input.id='button';
input.name='button';
td.appendChild(input);
tr.appendChild(td);
i++;
tablebody.appendChild(tr).

Second area 360 is displayed similarly:
table = document.createElement('table');
x.appendChild(table);
tablebody = document.createElement('tbody'); table.appendChild(tablebody);
tr = document.createElement('tr');
i = 0;
while (i<second_keyboard.length)
d = document.createElement('<td>');
input = document.createElement('input'); input.type='button';
input.value=second_keyboard[i]; input.attachEvent("onclick", pressed); input.id='button';
input.name='button';
td.appendChild(input);
tr.appendChild(td);
i++;
td = document.createElement('<td> </td>'); tr.appendChild(td).

The following is code for selector 370, for example:
td = document.createElement('<td>');
input = document.createElement('input'); input.type='button';
input.id='alp';
input.value='A B C';
input.attachEvent("onclick", mode);
td.appendChild(input);
tr.appendChild(td).
Similar statements are provided for buttons '1 2 3' and '@ % &'.

The code closes with </script> and </body>

### Reference Numbers

- -1, -2: suffix to distinguish states
- 100: CPP
- 200: browser
- 210: markup page
- 220: response
- 301-304: presentation
- 350: first keyboard area
- 360: second keyboard area
- 370: keyboard selector
- 400: method
- 401: first loop
- 402: second loop
- 4xx: method steps
- 900: server computer
- 901: client computer
- 920: memory
- 930: bus
- 940: input device
- 941: pen, cursor on screen
- 950: output device
- 951: screen
- 960: user interface
- 970: program carrier
- 980: program signal
- 990: network
- 999: system

## Claims

1. Method (400) for operating a browser (200) that interprets a markup page (210) and thereby displays a virtual keyboard (350/360) to a user;
the method (400) comprising the following steps:
• displaying (405) a first keyboard area (350);
• presenting (410) first and second input fields (310, 320) of first and second types, respectively, to the user;
• receiving a selection (420) for an input field (310/320) by the user by relating an input device (941) to either the first input field (310) or the second input field (320);
• displaying (430) a second keyboard area (360) corresponding to the type of the selected input field (310/320);
• reading (440) input from the user from the first keyboard area (350) and from the second keyboard area (360); and
• changing (450) the first keyboard area (350) according to user commands to a keyboard selector (370).

2. The method (400) of claim 1, wherein the page (210) is encoded in a markup language selected from the group of HTML, XML, WML.

3. The method (400) of claim 1, wherein receiving a selection (420) for an input field (310/320) comprises to monitor a cursor going over the input fields (310/320).

4. The method (400) of claim 1, wherein the steps displaying first area (405) and changing (450) are repeated in a first loop (401), and wherein steps receiving selection (420) and displaying second area (430) are repeated in a second loop (402).

5. Server computer (900) that generates a page (210) having computer instructions (100) for performing the method of claim 1.

6. Markup page (210) with instructions to a browser (200) that controls a computer processor (910) to display a virtual keyboard (350/360) on a screen (951); the instructions comprising:
• instructions for displaying (405) a first keyboard area (350);
• instructions for presenting (410) first and second input fields (310, 320) of first and second types, respectively;
• instructions for receiving a selection (420) for an input field (310/320) by a user by relating an input device (941) to either the first input field (310) or the second input field (320);
• instructions for displaying (430) a second keyboard area (360) corresponding to the type of the selected input field (310/320);
• instructions for reading (440) input from the user from the first keyboard area (350) and from the second keyboard area (360); and
• instructions for changing (450) the first keyboard area (350) according to user commands to a keyboard selector (370).

7. Computer program product (100) for controlling a virtual keyboard (350/360) with a first area (350) and a second area (360) on a screen (951) and for inputting (440) data into a first input field (310) of a first type and into a second input field (320) of a second type, the product (100) with first loop instructions and second loop instructions,
the product (100) **characterized in that**
• the first loop instructions have instructions for displaying (405) the first area (350) and changing (450) the first area (350) according to user commands to a keyboard selector (370); and that
• the second loop instructions have instructions for detecting (420) the selection of an input field (310/320) by the user who relates an input device (941) to either the first input field (310) or the second input field (320) and for displaying (430) the second area (360) corresponding to the type of the selected input field (310/320).
